Europäisches Patentamt

European Patent Office

Office européen des brevets

(11) Numéro de publication: **0 266 234**
**B1**

## (12) FASCICULE DE BREVET EUROPEEN

(45) Date de publication du fascicule du brevet:
**29.08.90**

(51) Int. Cl.⁵: **C08F 220/56**

(21) Numéro de dépôt: **87402117.3**

(22) Date de dépôt: **23.09.87**

(54) Copolymère acrylate acrylamide à bas poids moleculaire et procédé pour empêcher au moins en partie la formation de dépôts de sels issus de milieux aqueux.

(30) Priorité: **02.10.86 FR 8613862**

(43) Date de publication de la demande:
**04.05.88 Bulletin 88/18**

(45) Mention de la délivrance du brevet:
**29.08.90 Bulletin 90/35**

(84) Etats contractants désignés:
**DE ES GB GR IT NL**

(56) Documents cités:
**US-A- 4 072 607**
**US-A- 4 143 222**

(73) Titulaire: **INSTITUT FRANCAIS DU PETROLE, 4, Avenue de Bois-Préau, F-92502 Rueil-Malmaison(FR)**
Titulaire: **MANUFACTURE DE PRODUITS CHIMIQUES PROTEX, 2, Place Joffre, F-75007 Paris(FR)**

(72) Inventeur: **Roque, Claude, 225, rue des Landes, F-78400 Chatou(FR)**
Inventeur: **Ribba, Alain, Les Fillonières, F-37380 Crotelle(FR)**

(74) Mandataire: **Colas des Francs, Jean, Institut Français du Pétrole 4, Avenue de Bois Préau, F-92502 Rueil-Malmaison(FR)**

## Description

La présente invention concerne des copolymères à bas poids moléculaire, d'acide acrylique ou d'acide acrylique au moins partiellement salifié et d'acrylamide, leur procédé de préparation et leur utilisation pour empêcher au moins en partie la formation de dépôts susceptibles d'apparaître sur les parois d'installations pétrolières ou géothermales, à partir de systèmes aqueux renfermant des sels dissous.

Plus particulièrement, l'invention est relative à un procédé d'inhibition de dépôts provoqués par les incompatibilités des eaux d'injection et de gisement et/ou de leur déstabilisation.

Parmi les applications, on peut citer celles relatives aux industries pétrolières ou géothermales, installations de fond et de surface dans les domaines d'injectivité et de productivité des puits et de manière générale celles faisant appel à des systèmes aqueux industriels.

De manière générale, on recherche dans les opérations industrielles les moyens d'inhiber la formation de dépôts. Par exemple parmi les problèmes majeurs posés par l'injection d'eau dans les gisements pétrolifères, l'incompatibilité physico-chimique entre les eaux injectées et les eaux de gisement conduit à la formation de dépôts, par exemple des dépôts de composés alcalino-terreux, entraînant des dégradations irréversibles particulièrement néfastes à la roche réservoir et aux installations de production de fond comme de surface.

De nombreux polymères et copolymères anioniques ont été utilisés jusqu'à présent en tant qu'inhibiteurs de dépôts inorganiques, comme décrit par exemple, dans les brevets US 4072607, 4175100 et 4518511. Généralement, les inhibiteurs décrits présentent une distribution de masses comprise entre 500 et 25000. Certains peuvent montrer une répartition des masses entre 3.000 et 300.000 que l'on contrôle, comme il est décrit dans le brevet US 4.143.222.

Par exemple le brevet US 4072607 décrit la préparation et l'utilisation d'un mélange de copolymères acrylate-acrylamide dans des proportions molaires d'environ : 20 : 1 à 1 : 1 et de masse comprise entre 500 et 1200 avec une distribution telle qu'au moins 60 % dudit copolymère a une masse moléculaire d'environ 500 à 2000, qu'au moins 10 % dudit polymère a une masse moléculaire d'environ 4000 à 12000 et que le reste est compris entre 2000 et 4000, ces distributions de masse étant déterminées par chromatographie d'exclusion.

Ce copolymère est préparé par polymérisation d'acrylamide monomère en présence d'un initiateur et d'un agent de transfert de chaine et le polyacrylamide obtenu est hydrolysé partiellement en acrylate de sodium. L'agent de transfert de chaîne étant introduit pendant la polymérisation d'abord avec une dose de 3 % puis avec une dose de 16 % par rapport à l'acrylamide, on observe une large distribution de masses telle que celle décrite ci-dessus.

De plus, les brevets US 3665035 et US 3756257 décrivent, l'utilisation dans le traitement des puits de pétrole, comme moyen de prévention de cristallisation, d'une composition polymérique résultant de la réaction, à une température de 24°C à 80°C dans un solvant inerte tel que l'eau, de 80 à 90 parts en poids d'un seul monomère, l'acide acrylique, de 7 à 15 parts en poids d'acide thioglycolique comme agent de transfert de chaîne et de 1,5 à 5 parts en poids de persulfate d'ammonium comme initiateur de radicaux. Le polymère d'acide acrylique ainsi obtenu présente une masse moléculaire moyenne en nombre comprise entre 500 et 1000.

Sa préparation met en oeuvre un procédé à une ou plusieurs étapes où l'on ajoute, par incréments jusqu'à deux fois, au milieu inerte constitué par le polymère d'acide acrylique obtenu à la fin de la première étape, une nouvelle charge d'acide acrylique, d'agent de transfert de chaîne et de catalyseur initiateur de radicaux qui va se polymériser et s'ajouter au produit déjà polymérisé et ainsi de suite.

On a découvert que ce type de polymère n'est que partiellement adapté aux traitements des dépôts de sulfates complexes de métaux alcalino- terreux dans des conditions thermodynamiques sévères.

Par ailleurs on a découvert que les produits copolymèriques à masse moléculaire élevée présentaient des difficultés de solubilité et donc d'utilisation dans les conditions sévères des gisements profonds, à très haute salinité des eaux (par exemple de 150 à 350 g/l), à température et pression élevées (par exemple 120 à 150 °C, sous une pression de 100 à 400 bar) et que ces produits avaient un niveau d'activité inhibiteur moindre dans les mêmes conditions thermodynamiques précitées. De plus, on a remarqué qu'une fois injectés, ces produits présentaient des effets d'inhibition de très courte durée (quelques heures), même dans des conditions thermodynamiques peu sévères.

On a aussi découvert que ces produits selon l'art antérieur étant peu solubles dans des eaux salées contenant de 30 à 100 g/l de sel étaient difficilement utilisables dans les cas d'injection d'eau de mer par exemple.

Un premier objet de l'invention est donc de proposer une nouvelle composition copolymérique, acide acrylique et/ou acrylate -acrylamide à très bas poids moléculaire, ayant notamment une utilité dans la prévention de la précipitation et/ou de la formation de dépôts cristallins sur des surfaces en contact avec des eaux incompatibles.

Un autre objet est de fournir un procédé pour préparer ladite composition copolymérique.

Un autre objet de l'invention est de décrire un procédé permettant l'utilisation de produits solubles dans les mélanges d'eaux salées (en particulier pour des eaux dont la salinité peut atteindre ou dépasser 350 g/l) et ayant un niveau d'activité élevé dans les conditions thermodynamiques sévères des gisements profonds.

Un autre objet est de décrire un procédé qui permet l'injection de produits inhibiteurs solubles dans les eaux salées destinées à l'injection (par exemple eaux de mer et d'aquifères).

Un autre objet est de décrire un procédé d'inhibition de la croissance cristalline des dépôts aussi bien dans les conditions thermodynamiques des installations de surface que dans celles des réservoirs très profonds.

Un autre objet est l'utilisation d'un inhibiteur en solution dont les propriétés sont maintenues durant des périodes compatibles avec la durée des opérations des traitements pétroliers, aussi bien au moment de la production qu'au moment du traitement en surface qui peut être réalisé sur un site très distant du lieu de production.

La présente invention permet de remédier à ces inconvénients et de répondre à ces objectifs. Elle concerne un copolymère anionique ou une composition copolymérique anionique comprenant de l'acide acrylique et de l'acrylamide dans un rapport pondéral allant environ respectivement de 95 : 5 à 25 : 75 et avantageusement de 90 : 10 à 50 : 50. De manière plus précise, la distribution des masses moléculaires dudit copolymère, déterminée par chromatographie analytique d'exclusion, est telle que 60% au moins des masses moléculaires en poids sont inférieures à 500. Sa polydispersité est au plus égale à 3 et avantageusement au plus égale à 2.

L'invention concerne aussi une composition copolymèrique ou des copolymères anioniques comprenant des motifs dérivant de l'acide acrylique au moins en partie sous forme de sels alcalins et de l'acrylamide, les valeurs du rapport pondéral, de la répartition des masses moléculaires et de la polydispersité étant définies comme ci-dessus. Les sels alcalins d'acrylates sont avantageusement l'acrylate de sodium, l'acrylate de potassium et l'acrylate d'ammonium, seuls ou en mélange.

Par composition copolymérique selon l'invention, on entend un mélange de copolymères tels que définis ci-dessus avec un nombre de motifs sur la molécule (par exemple de 2 à 10) tel que la masse moléculaire moyenne corresponde à la définition selon l'invention décrite ci- dessus.

L'invention concerne aussi le procédé de préparation du copolymère qui est caractérisé en ce qu'on fait réagir les quatre constituants suivants :

a) un premier monomère consistant essentiellement en acide acrylique,
b) un second monomère consistant essentiellement en acrylamide,
c) un agent de transfert de chaîne, et
d) un catalyseur initiateur de radicaux libres.

On opère avantageusement dans un milieu comprenant un solvant inerte et à une température comprise entre 60 et 120°C, de préférence entre 70 et 100°C, lesdits monomères étant dans une proportion globale de 4 à 15 %, en poids par rapport audit milieu, ledit agent de transfert de chaîne en une proportion de 10 à 20 % en poids par rapport auxdits monomères et le catalyseur en une proportion de 2 à 8 % en poids par rapport auxdits monomères, lesdits premier et second monomères étant dans un rapport pondéral respectif de 95 : 5 à 25 : 75 de telle sorte que l'on obtient un produit comprenant le copolymère désiré en mélange avec le solvant.

La réaction qui se produit est exothermique et on contrôle généralement l'exothermicité en refroidissant le système réactionnel. La réaction s'effectue en solution et tout solvant inerte, ou système de solvants inertes susceptibles de solubiliser les constituants de la charge ou de ne pas réagir substantiellement avec la charge ou la composition copolymèrique formée, peut convenir. L'eau est particulierement avantageuse pour des raisons d'économie et de commodité.

On opère de préférence à faible concentration de monomères dans le milieu de polymérisation. Cette caractéristique à laquelle s'ajoute le contrôle de l'exothermicité permet de se trouver dans des conditions qui favorisent la formation du copolymère à faible masse moléculaire.

Selon une caractéristique de l'invention, on peut terminer la réaction de copolymérisation en ajoutant de 0,5 % à 4 % en poids, par rapport auxdits monomères, de catalyseur supplémentaire audit produit solvant-copolymère, et en laissant la réaction se poursuivre, ce qui présente l'avantage de consommer sensiblement tous les monomères.

Selon une autre caractéristique de l'invention, on peut ne plus procéder à la préparation en une seule étape mais en plusieurs étapes successives. Dans ces conditions, on divise la quantité des constituants à mettre en jeu en parties aliquotes sensiblement égales, on effectue une première réaction de copolymérisation dans les conditions et avec les proportions entre les divers constituants définies ci-dessus, de manière à former ledit produit solvant -copolymère, puis une fois que la réaction de copolymérisation précédente est substantiellement terminée, on effectue au moins une autre réaction de copolymérisation par addition, dans ledit produit solvant-copolymère de la réaction précédente, d'une partie aliquote desdits premier et second monomères, d'une partie aliquote de l'agent de transfert de chaîne , d'une partie aliquote de catalyseur, chacune des réactions de copolymérisation successives étant réalisée substantiellement dans les conditions et avec les proportions entre les divers constituants définies précédemment au cours de l'ensemble des étapes de la première réaction.

Les additions successives des réactifs ainsi que le maintien d'une concentration réduite en monomères présentent l'avantage de favoriser la faible polydispersité du copolymère selon l'invention et la gamme de faible poids moléculaire dudit copolymère.

Une charge faible d'acide acrylique, d'acrylamide, d'agent de transfert de chaîne et de catalyseur est ajoutée au système selon les quantités et les rapports pondéraux précités dans le procédé à une seule étape et le procédé à plusieurs étapes est répété avec addition de charges nouvelles successives jusqu'à ce que la composition copolymérique atteigne un niveau élevé de matière active. On peut répéter de manière préférée de 3 à 10 fois la réaction de façon à obtenir la concentration désirée en produit final et l'on a, par exemple, observé une quantité de matière active de 52 % après dix additions successives de charge.

L'agent de transfert de chaîne est de préférence l'acide thioglycolique. Il est avantageusement utilisé dans des proportions de 5 à 30 % poids par rapport à l'ensemble des monomères et de préférence, de 12 à 15 % poids.

Comme catalyseur initiateur de radicaux, on peut utiliser par exemple le peroxyde d'hydrogène ou un persulfate de métal alcalin, par exemple un persulfate de sodium, potassium ou ammonium. Les persulfates précités conviennent particulièrement bien dans le domaine des hautes températures de la réaction. Utilisé généralement dans une proportion de 2 à 8 % poids par rapport aux monomères totaux, le persulfate d'ammonium est préféré avec une proportion de 3 à 5 % poids. Les monomères se copolymérisent avantageusement à une température de 60 à 120°C et de préférence à une température comprise entre 70 et 100°C. Ils sont utilisés généralement avec un degré de pureté commercialement disponible dans une proportion de 4 à 15 % et de préférence de 6 à 12 % poids par rapport au milieu de copolymérisation dans lequel on les ajoute.

La durée de réaction et donc de chaque étape est généralement courte et est habituellement comprise entre 10 mn et 60 mn par réaction.

La neutralisation du copolymère rend notamment le produit obtenu moins corrosif. Elle s'effectue généralement à un pH de 3 à 9 en fonction du degré de neutralisation souhaité avec un agent neutralisant tel que les hydroxydes de métaux alcalins comme par exemple les hydroxydes de sodium et de potassium, l'hydroxyde d'ammonium, les alkylamines, les mono- et polyalcanolamines, et à une température généralement au plus égale à 70°C. L'agent de neutralisation peut être ajouté lentement de manière à contrôler la température et la dissolution ; on évite ainsi la formation importante de vapeur.

La préparation des copolymères selon l'invention avec deux étapes:

1) une copolymérisation mettant en jeu notamment les deux monomères acide acrylique et acrylamide,
2) une neutralisation ou salification partielle ou totale des sites carboxyliques du copolymère ainsi obtenu, sans hydrolyse de l'acrylamide,

présente l'avantage par rapport à l'art antérieur préconisant la préparation de copolymère par hydrolyse de l'acrylamide que, les copolymères une fois injectés, leurs sites amides restent en partie potentiellement hydrolysables et leur salification secondaire par contact avec les cations du réservoir devient possible de sorte que les propriétés inhibitrices des produits selon l'invention préparés selon ce mode opératoire et injectés par exemple dans le puits de production restent sensiblement intactes durant des périodes pouvant atteindre plusieurs semaines. Les installations de surface par lesquelles circuleront par la suite les fluides ainsi traités pourront même être protégées sur des distances de plusieurs kilomètres en raison de cet effet persistant des propriétés d'inhibition.

On décrira ci-dessous l'utilisation du copolymère anionique comprenant de l'acide acrylique au moins en partie sous forme salifiée. L'invention concerne donc un procédé pour empêcher au moins en partie la formation de dépôts de sels susceptibles d'apparaitre sur les parois d'installations pétrolières ou géothermales ou industrielles à partir d'un milieu aqueux contenant notamment des composés de métaux alcalins et/ou alcalino-terreux et circulant dans lesdites installations, dans lequel on ajoute audit milieu aqueux un copolymère anionique composé (a) d'acide acrylique au moins en partie sous forme de sels alcalins et (b) d'acrylamide en proportions pondérales allant environ de 95 : 5 à 25 : 75 et avantageusement de 90 : 10 à 50 : 50. En outre la distribution des masses moléculaires dudit copolymère, déterminée par chromatographie analytique d'exclusion, est telle que 60 % au moins des masses moléculaires en poids sont inférieures à 500.

Ce procédé présente notamment l'avantage d'inhiber au niveau des parois des installations l'incrustation des dépôts présents ou formés à partir des milieux aqueux aussi bien dans les conditions de surface que dans celles des réservoirs très profonds, par exemple de 30 °C à 250 °C, de 1 à 500 bar et jusqu'à des teneurs en sels dans l'eau d'environ 350 g/l.

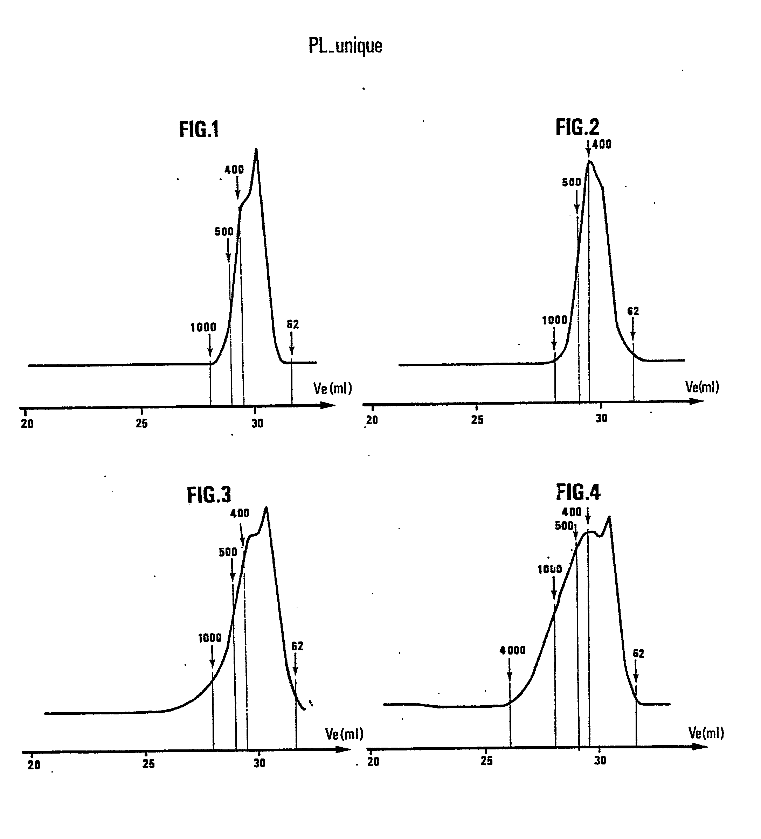

Les figures 1 à 4 illustrent des chromatogrammes d'exclusion correspondant à des modes de mise en oeuvre préférés.

La chromatographie d'exclusion (ou par permüation sur gel) est une des méthodes les plus efficaces pour l'analyse des distributions de masses moléculaires des copolymères, selon l'invention. Cette technique est en effet liée à la différence de taille des molécules de polymères ou copolymères en solution, la taille elle même dépendant de la masse moléculaire et du solvant utilisé. On fait donc circuler la solution de copolymère à travers trois colonnes TOYO SODA remplies d'un gel microparticulaire TSK PW de porosité 1000 Å, 3000 Å et 5000 Å (1 Å = 10$^{-10}$m) de 60 cm de longueur, 7 mm de diamètre intérieur. L'éluant est constitué de 0,5 M NaCl dans l'eau et l'analyse est faite à 1,0 ml/mn . Les molécules de taille les plus grandes et donc de masses moléculaires les plus élevées ne peuvent pas pénétrer dans les pores et sont donc exclues, c'est-à-dire éluées en premier alors que les molécules les plus petites parvenant à pénétrer dans les pores des particules, sont retenues et finalement éluées en dernier. Il suffit ensuite par référence à des masses connues d'étalonner le chromatogramme obtenu.

Sur ces figures, on a porté en abscisse le volume d'élution Ve (ml) (correspondant à une échelle de masses moléculaires) et en ordonnée la quantité relative de ces masses, pour des constitutions ou balances acrylamide-acrylate de sodium différentes. Par exemple, à un volume d'élution de 28 ml, 29 ml, 29,5 ml et 31,5 ml correspondent respectivement les masses 1000, 500 et 400 de polyoxyéthylène et 62 de l'éthylèneglycol, éluées avec de l'eau. Le tableau I présente les caractéristiques essentielles des chromatogrammes obtenus.

La masse en poid $\overline{M}_p$ et la masse en nombre $\overline{M}_n$ se définissent de la façon suivante:

$$\overline{M}_p = \frac{\Sigma\ c_i\ M_i^2}{\Sigma\ c_i\ M_i}$$

$c_i$ étant la concentration du constituant de masse $M_i$

$$\overline{M}_n = \frac{\Sigma\ c_i\ M_i}{\Sigma\ c_i}$$

et la polydispersité est égale à:

$$I_p = \frac{\overline{M}_p}{\overline{M}_n}$$

Le pourcentage de copolymères ayant une gamme de masses particulières par exemple inférieure à 500 est déterminé par intégration, suivant une technique connue, des chromatogrammes d'exclusion.

| Figures | Acry-lamide % | Acry-late de sodium % | $\overline{M}_p$ | $\overline{M}_n$ | $I_p$ | $\overline{M}_p < 500$ % | $500 < \overline{M}_p < 1000$ % | $\overline{M}_p > 1000$ |
|---------|------|------|-----|-----|-----|-----|-----|-----|
| 1 | 12 | 88 | 372 | 282 | 1,3 | 80 | 20 | ≃ 0 |
| 2 | 25 | 75 | 386 | 297 | 1,3 | 85 | 15 | ≃ 0 |
| 3 | 40 | 60 | 405 | 238 | 1,7 | 72 | 20 | 8 |
| 4 | 50 | 50 | 448 | 223 | 2,0 | 62 | 24 | 14 |

L'inhibiteur peut être introduit sec dans l'une des eaux du système aqueux et de préférence dans l'eau d'injection douce ou salée qui peut éventuellement être constituée par un mélange d'eaux. Il peut aussi être introduit en solution commerciale comprenant par exemple de 50 à 60 % de matière active. Pour des raisons de commodité d'emploi, l'inhibiteur peut également être introduit à partir de solutions plus diluées pouvant aller par exemple jusqu'à 020 grammes par litre. Ces solutions peuvent être préparées à l'avance ce qui est un avantage appréciable en exploitation pour des injections généralisées puisque les solutions peuvent être stockées et leur vieillissement (de quelques minutes à une dizaine de jours) ne perturbe pas l'activité inhibitrice du copolymère (et dans certains cas peut être même conseillée).

On peut introduire de 1 à 200 ppm en poids (parties par million) de matière active selon l'invention dans le milieu aqueux. On a obtenu d'excellents résultats et notamment une activité d'inhibition de croissance cristalline (voir la définition ci-dessous) sensiblement égale à 100 % dans des conditions thermodynamiques très sévères de gisement, pour une concentration de 15 à 50 ppm de matière active.

Il faut noter que l'efficacité d'inhibition pour un mélange d'eaux donné dépend en outre de la constitution du copolymère c'est-à-dire du rapport pondéral acrylate-acrylamide.

Avant de procéder à la mise en oeuvre du copolymère comme inhibiteur selon l'invention, en vraie grandeur dans les installations, il est souhaitable de réaliser des tests d'inhibition en laboratoire qui sont conduits avantageusement durant 4 à 6 heures sous une pression de 10 à 400 bar et à une température comprise entre 20° et 200°C de façon à se placer sensiblement dans les conditions thermodynamiques du gisement ou des installations étudiées.

A ce propos, on définit une activité d'inhibition par gravimétrie qui s'écrit sous la forme :

$$A = \frac{m_1 - m_2}{m_1} \times 100$$

où $m_1$ et $m_2$ sont la masse de dépôts obtenus par le mélange des eaux respectivement en absence et en présence d'inhibiteur, ces dépôts étant recueillis dans les mêmes conditions.

Les eaux de gisement et d'injection préalablement recueillies peuvent être mélangées en toutes proportions mais de manière préférée, elles sont mélangées dans un rapport correspondant à un mélange dit critique que l'on définit ci-dessous. Pour ce faire, elles sont amenées en conditions thermodynamiques semblables à celles rencontrées dans les réservoirs pétroliers profonds pour chaque rapport de mélange d'eaux. Dans ces conditions sévères l'incompatibilité des eaux peut faire apparaitre notamment des dépôts de sulfate d'alcalino-terreux et en particulier de sulfate de baryum ou de calcium, de carbonates, de sulfures et de phosphates de type alcalin ou alcalino-terreux. Les sels précipités sont recueillis par filtration sous pression différentielle, séchés et pesés. Les résultats sont consignés sous forme de courbe gravimétrique d'incompatibilité des eaux sensiblement parabolique qui permet de déterminer autour de son maximum le mélange critique des eaux faisant apparaître le maximum de dépôts. Une fois le mélange critique des eaux préparé, on introduit l'inhibiteur selon l'invention et dans les conditions thermodynamiques précitées ; on est alors en mesure de déterminer sur une courbe : activité en fonction de la concentration en inhibiteur, la gamme de concentration optimale de l'inhibiteur qu'il est nécessaire d'ajouter pour obtenir une activité d'inhibition sensiblement égale à 100 %. Il suffit alors pour la résolution de cas réel sur champ, d'introduire l'inhibiteur à cette concentration optimale.

Le procédé selon l'invention permet de répondre au problème de l'incompatibilité de divers mélanges d'eaux dans le cadre d'une gamme de force ionique comprise entre 0,05 et 6,50 et de pH compris entre 8,5 et 5,0, sans que ces limites soient impératives.

L'inhibiteur selon l'invention peut être utilisé également en solution avec des additifs habituellement employés dans la production pétrolière, par exemple, tels que des désémulsifiants, des agents anticorrosion, des agents bactéricides, des agents antimousse.

Les exemples qui suivent sont donnés à titre illustratif. On a considéré par exemple le cas où l'on mélange seulement un couple d'eaux mais le procédé peut s'appliquer à un mélange plus complexe pour lequel il suffira de déterminer la courbe gravimétrique d'incompatibilité et par conséquent la valeur du mélange favorisant le maximum de dépôt.

<u>Exemple 1</u>.

Les quantités des réactifs sont exprimées dans les exemples en parties poids.

Dans un réacteur agité muni d'un condenseur à reflux, d'un thermomètre et d'une ampoule d'addition, on charge 2700 parties d'eau désionisée et 3 parties de Masquol DTPA (sel de soude de l'acide diéthylène triamine pentacétique). On chauffe à environ 75°C, à cette température, on charge dans le réacteur 306 parties d'acide acrylique, 102 parties d'acrylamide et 49 parties d'acide thioglycolique (jouant le rôle d'agent de transfert de chaîne). Après dissolution et homogénéisation on introduit dans le réacteur une solution de 12,6 parties de persulfate d'ammonium dans 114 parties d'eau désionisée. Une réaction exothermique a lieu. La température monte de 75 à 95°C. On contrôle l'exothermicité pour ne pas dépasser 95°C. La réaction est rapide et dure 15 à 20 minutes. Une fois l'exothermicité finie, on refroidit à 90°C et on charge à nouveau une solution de 4 parties de persulfate d'ammonium dans 30 parties d'eau désionisée et on laisse réagir 30 minutes puis on refroidit à 75°C le mélange réactionnel.

On répète 9 fois de suite la procédure précédente, en chargeant dans le milieu réactionnel, à chaque fois, 306 parties d'acide acrylique, 102 parties d'acrylamide et 49 parties d'acide thioglycolique, puis une solution de 12,6 parties de persulfate d'ammonium dans 114 parties d'eau désionisée, et après la réaction exothermique, une solution de 4 parties de persulfate d'ammonium dans 30 parties d'eau désionisée.

A la dernière addition, on maintient 2 heures de plus à 90°C après avoir ajouté une solution de 9 parties de persulfate d'ammonium dans 70 parties d'eau désionisée, pour réduire au maximum les monomères libres résiduels.

On refroidit ensuite à 60°C et on ajoute lentement 1100 parties de soude en paillettes de façon à neutraliser à un pH de 5,5 à 6.

On refroidit à 20°C, et on ajuste par simple dilution le produit aux normes de matières actives, pH et viscosité.

On obtient une solution aqueuse de copolymère 25 : 75 en poids d'acrylamide et d'acrylate de sodium, à 52 % de concentration et à pH d'environ 5,5 - 6 et ayant une viscosité d'environ 0,3 à 0,5 Pa.s à 20°C avec une distribution de masses moléculaires précisée dans la figure 2.

Exemple 2.

On répète l'exemple 1 dans les mêmes conditions sauf que l'on prend comme monomères 204 parties d'acide acrylique et 204 parties d'acrylamide et l'on obtient un copolymère 50 : 50 acrylate -acrylamide défini par le chromatogramme d'exclusion de la figure 4.

Exemple 3.

On mélange dans un réacteur en acier un couple d'eaux comprenant une eau d'injection A de type eau de mer, de composition et de caractéristiques présentées dans le tableau II et une eau de gisement B de type cambrien dont la composition et les caractéristiques sont inscrites dans le tableau III. Ces eaux sont mélangées dans les proportions 30 % eau A - 70 % eau B correspondant au mélange critique favorisant le maximum d'incompatibilité.

Le mélange est réalisé à 120°C sous 200 bar et une durée de réaction de 4 heures en présence des hydrocarbures gazeux et liquides du gisement.

Après ouverture du réacteur les dépôts sont recueillis par filtration sous pression différentielle, séchés et pesés. On obtient ainsi la masse de dépôts $m_1$ nécessaire au calcul de l'activité d'inhibition.

On répète la même opération après avoir introduit l'inhibiteur selon l'invention (à partir d'une solution commerciale à 55 % de matière active) dans l'eau A, ce qui permet d'obtenir en fin d'opération la masse de dépôts $m_2$ nécessaire au calcul de l'activité.

On a ainsi découvert que l'on obtenait une activité d'inhibition de 100 % avec les copolymères acrylamide-acrylique salifiés sous forme d'acrylate de sodium selon l'invention de constitution et pour des concentrations présentées dans le tableau IV.

## TABLEAU II

### EAU D'INJECTION A

| CONSTITUANTS | CONCENTRATION mg/l |
|---|---|
| $Na^+$ | 11500 |
| $K^+$ | 410 |
| $Mg^{++}$ | 1440 |
| $Ca^{++}$ | 450 |
| $Sr^{++}$ | 9 |
| Total cations | 13809 |
| $Cl^-$ | 20200 |
| $HCO_3^-$ | 166 |
| $SO_4^{--}$ | 2225 |
| Total anions | 22591 |
| Force ionique J | 0,74 |
| $pH_{20°C}$ | 8,17 |
| $d_{25°C}$ | 1,0236 |
| Salinité calculée | 36400 |

TABLEAU III

EAU DE GISEMENT B

| CONSTITUANTS | CONCENTRATION (mg/l) |
|---|---|
| $Na^+$ | 71094 |
| $K^+$ | 5769 |
| $NH_4^+$ | 2529 |
| $Li^+$ | 82 |
| $Ca^{++}$ | 27269 |
| $Mg^{++}$ | 8369 |
| $Sr^{++}$ | 1215 |
| $Ba^{++}$ | 562 |
| $Mn^{++}$ | 55 |
| $B^{+++}$ | 28 |
| Total cations | 116972 |
| $Cl^-$ | 194010 |
| $Br^-$ | 776 |
| Total anions | 194786 |
| Force ionique J | 6,45 |
| $pH_{20°C}$ | 6,85 |
| $d_{20°C}$ | 1,2077 |
| Salinité calculée | 311758 mg/l |

EP 0 266 234 B1

TABLEAU IV

| M̄ < 500 % | Constitution % poids acrylamide-acrylique | | concentration ppm poids en matière active |
|---|---|---|---|
| 80 | 12 | 88 | 20 - 30 |
| 85 | 25 | 75 | 15 - 25 |
| 72 | 40 | 60 | 20 - 30 |
| 62 — | 50 | 50 | 30 - 50 |

Exemple 4.

On compare les concentrations nécessaires à 100 % d'activité entre les copolymères comprenant 25 % d'acrylamide et 75 % d'acrylate de sodium selon l'invention et les copolymères de masse moléculaire plus élevée et de même constitution (25 % acrylamide - 75 % acrylate) de sodium introduits suivant l'exemple 3 dans une eau d'injection C de type albien mélangée à une eau de gisement D de type cambrien dans le rapport de mélange critique 40 % C - 60 % D. La composition de ces eaux est donnée dans les tableaux VI et VII. Les résultats de l'exemple 4 sont présentés dans le tableau V.

TABLEAU V

| Masses moléculaires | Concentration ppm matière active |
|---|---|
| < 500   (85 %) | 15 -  25 |
| 500 - 1000 | 80 - 100 |
| 1000 - 2000 | 150 - 200 |
| 5000 - 10000 | > 200 |

10

EP 0 266 234 B1

## TABLEAU VI

## EAU D'INJECTION C

| CONSTITUANTS | CONCENTRATION mg/L |
|---|---|
| $Na^+$ | 260 |
| $K^+$ | 45 |
| $Mg^{++}$ | 65 |
| $Ca^{++}$ | 185 |
| $Sr^{++}$ | 3 |
| $Fe^{++}$ | 9 |
| Total cations | 567 |
| $Cl^-$ | 533 |
| $HCO_3^-$ | 285 |
| $SO_4^{--}$ | 380 |
| Total anions | 1198 |
| Force ionique J | 0,045 |
| $pH_{20°C}$ | 8,06 |
| $d_{20°C}$ | 1,042 |
| Salinité calculée | 1765 mg/l |

11

## TABLEAU VII

### EAU DE GISEMENT D

| CONSTITUANTS | CONCENTRATION mg/l |
|---|---|
| $Na^+$ | 77000 |
| $K^+$ | 8000 |
| $Li^+$ | 110 |
| $NH_4^+$ | 41 |
| $Ca^{++}$ | 31500 |
| $Mg^{++}$ | 8700 |
| $Sr^{++}$ | 1025 |
| $Ba^{++}$ | 480 |
| $Mn^{++}$ | 639 |
| $Zn^{++}$ | 110 |
| $Fe^{++}$ | 1000 |
| $Pb^{++}$ | 6 |
| $B^{+++}$ | 15 |
| Total cations | 128626 |
| $Cl^-$ | 204800 |
| $Br^-$ | 468 |
| $I^-$ | 38 |
| Total anions | 205306 |
| Force ionique J | 6,9 |
| $pH_{20°C}$ | 5,30 |
| $d_{25°C}$ | 1,220 |
| Salinité calculée | 333932 mg/l |

Exemple 5.

On prépare comme dans l'exemple 1 des copolymères différemment salifiés) copolymère acrylamide - acrylate d'ammonium ou copolymère acrylamide - acrylate de potassium). L'activité d'inhibition 100 % est atteinte avec sensiblement les mêmes concentrations d'inhibiteur que celles de l'exemple 3, pour des constitutions de copolymères identiques.

Exemple 6.

On introduit l'inhibiteur (copolymère : 25% acrylamide - 75% acrylate de sodium) dans l'eau de mer A comme dans l'exemple 3 à partir d'une solution de 10 g de matière active par litre d'eau d'injection et après un vieillissement de 10 jours.
L'activité d'inhibition de 100 % est atteinte pour une concentration en inhibiteur sensiblement identique à celle obtenue dans l'exemple 3.

Exemple 7.

On introduit l'inhibiteur de l'exemple 6 ou de masses moléculaires plus élevées à titre comparatif, dans le mélange d'eaux de l'exemple 3 à une concentration de 50 ppm. Le tableau VIII permet de vérifier par rapport à l'art antérieur que le copolymère selon l'invention possède une activité inhibitrice de longue durée évaluée par la persistance de la limpidité du mélange d'eaux traitées.

## TABLEAU VIII

| Masses moléculaires | Persistance de l'activité 100 % |
|---|---|
| < 500 (85 %)<br>500 - 2000<br>5000 - 10000 | plusieurs mois<br>40 heures<br>30 heures |

## Revendications

1.- Copolymère anionique comprenant des motifs dérivant de l'acide acrylique et de l'acrylamide dans un rapport pondéral allant environ de 95 : 5 à 25 : 75, caractérisé en ce que la distribution des masses moléculaires dudit copolymère, déterminée par chromatographie analytique d'exclusion, est telle que 60 % au moins des masses moléculaires en poids sont inférieures à 500.

2.- Copolymère anionique selon la revendication 1, dans lequel l'acide acrylique est au moins en partie sous forme d'acrylate d'au moins un métal alcalin.

3.- Copolymère selon la revendication 1 ou 2, dans lequel la polydispersité est au plus égale à 3.

4.- Procédé de préparation d'un copolymère selon l'une des revendications 1 à 3 caractérisé en ce qu'on fait réagir les quatre constituants suivants :
a) un premier monomère consistant essentiellement en acide acrylique,
b) un second monomère consistant essentiellement en acrylamide,
c) un agent de transfert de chaîne,
d) un catalyseur initiateur de radicaux libres,
dans un milieu comprenant un solvant inerte et à une température comprise entre 60 et 120°C, lesdits monomères étant dans une proportion globale de 4 à 15 %, en poids par rapport audit milieu, ledit agent de transfert de chaîne en une proportion de 5 à 30 % en poids par rapport auxdits monomères et le catalyseur en une proportion de 2 à 8 % en poids par rapport auxdits monomères, lesdits premier et second monomères étant dans un rapport pondéral respectif de 95:5 à 25:75 de telle sorte que l'on obtient un produit comprenant le copolymère désiré en mélange avec le solvant.

5.- Procédé de préparation selon la revendication 4, caractérisé en ce que l'on termine la réaction de copolymérisation en faisant réagir une proportion supplémentaire dudit catalyseur, de 0,5 % à 4 % en poids par rapport auxdits monomères, avec ledit produit solvant-copolymère.

6.- Procédé de préparation selon la revendication 4 ou 5, caractérisé en ce que l'on divise la quantité des constituants à mettre en jeu en parties aliquotes sensiblement égales, on effectue une première réaction de copolymérisation dans les conditions et avec des proportions entre les divers constituants définies dans la revendication 4 ou 5, de manière à former ledit produit solvant -copolymère, puis, une fois que la réaction de copolymérisation précédente s'est substantiellement terminée, on effectue successivement au moins une autre réaction de copolymérisation par addition, dans ledit produit solvant-copolymère de la réaction précédente, d'une partie aliquote desdits premier et second monomères, d'une partie aliquote de l'agent de transfert de chaîne, d'une partie aliquote de catalyseur, chacune des réactions de copolymérisation successives étant réalisée substantiellement dans les conditions et avec les proportions entre les divers constituants définies dans la revendication 4 ou 5.

7.- Procédé de préparation selon l'une quelconque des revendications 4 à 6, caractérisé en ce que l'agent de transfert de chaîne est l'acide thioglycolique.

8.- Procédé de préparation selon l'une quelconque des revendications 4 à 7 caractérisé en ce que le catalyseur est le persulfate d'ammonium.

9.- Procédé de préparation selon la revendication 6, caractérisé en ce que l'on réalise de 3 à 10 réactions de copolymérisation successives.

10.- Procédé de préparation selon l'une quelconque des revendications 4 à 9, caractérisé en ce que l'on réalise une étape de neutralisation à un pH de 3 à 9 avec un agent de neutralisation choisi parmi les hydroxydes de potassium, de sodium, d'ammonium, les alkylamines, les mono-et polyalcanolamines.

11.- Utilisation d'un copolymère anionique selon l'une des revendications 1 à 3 dans un procédé pour empêcher au moins en partie la formation de dépôts incrustants susceptibles d'apparaître sur les parois d'installations pétrolières, géothermales ou industrielles par circulation dans lesdites installations d'un milieu aqueux contenant au moins un composé de métal alcalin et/ou alcalino-terreux, caractérisée en ce que l'on ajoute ledit copolymère anionique audit milieu aqueux.

12.- Utilisation selon la revendication 11, caractérisée en ce que le copolymère est introduit sous forme de solution fraîchement préparée.

13.- Utilisation selon la revendication 11, caractérisée en ce que le copolymère est introduit sous forme de solution vieillie.

14.- Utilisation selon l'une des revendications 11 à 13, caractérisée en ce que l'on introduit une quantité de 1 à 200 ppm en poids dudit copolymère.

15.- Utilisation selon la revendication 14, caractérisée en ce que l'on introduit une quantité de 15 à 50 ppm en poids dudit copolymère.

**Patentansprüche**

1. Anionisches Copolymer, das von Acrylsäure und Acrylamid abgeleitete Einheiten in einem Gewichtsverhältnis von 95:5 bis 25:75 enthält, dadurch gekennzeichnet, daß die Verteilung der Molekularmassen des Copolymers, bestimmt durch analytische Ausschlußchromatographie, so ist, daß mindestens 60 Gew.-% der Molekularmassen unter 500 liegen.

2. Anionisches Copolymer nach Anspruch 1, in dem die Acrylsäure mindestens zum Teil in Form eines Acrylats mindestens eines Alkalimetalls vorliegt.

3. Copolymer nach Anspruch 1 oder 2, in dem die Polydispersität höchstens gleich 3 ist.

4. Verfahren zur Herstellung eines Copolymers nach einem der Ansprüche 1 bis 3, dadurch gekennzeichnet, daß man die vier folgenden Komponenten:

(a) ein erstes Monomer, das im wesentlichen aus Acrylsäure besteht,

(b) ein zweites Monomer, das im wesentlichen aus Acrylamid besteht,

(c) ein Kettenübertragungsmittel und

(d) einen freie Radikale initiierenden Katalysator,

in einem Milieu, das ein inertes Lösungsmittel umfaßt, und bei einer Temperatur zwischen 60 und 120°C miteinander reagieren läßt, wobei die Monomeren in einem Gesamtmengenanteil von

4 bis 15 Gew.-%, bezogen auf das Milieu, das Kettenübertragungsmittel in einem Mengenanteil von 5 bis 30 Gew.-%, bezogen auf die Monomeren, und der Katalysator in einem Mengenanteil von 2 bis 8 Gew.-%, bezogen auf die Monomeren, vorliegen, wobei die ersten und zweiten Monomeren in einem jeweiligen Gewichtsverhältnis von 95:5 bis 25:75 vorliegen, so daß man ein Produkt erhält, welches das gewünschte Copolymer im Gemisch mit dem Lösungsmittel umfaßt.

5. Herstellungsverfahren nach Anspruch 4, dadurch gekennzeichnet, daß man die Copolymerisationsreaktion beendet, indem man einen ergänzenden Mengenanteil des Katalysators von 0,5 bis 4 Gew.-%, bezogen auf die Monomeren, mit dem Lösungsmittel-Copolymer-Produkt reagieren läßt.

6. Herstellungsverfahren nach Anspruch 4 oder 5, dadurch gekennzeichnet, daß man die Menge der einzusetzenden Komponenten in im wesentlichen gleiche aliquote Anteile aufteilt, eine erste Copolymerisationsreaktion unter den Bedingungen und mit Mengenanteilen zwischen den verschiedenen Komponenten, wie sie im Anspruch 4 oder 5 definiert sind, so durchführt, daß das Lösungsmittel-Copolymer-Produkt gebildet wird, dann, wenn einmal die vorhergehende Copolymerisationsreaktion im wesentlichen beendet ist, anschließend mindestens eine weitere Copolymerisationsreaktion durchführt, indem man dem Lösungsmittel-Copolymer-Produkt der vorhergehenden Reaktion einen aliquoten Anteil des ersten und des zweiten Monomeren, einen aliquoten Anteil des Kettenübertragungsmittels und einen aliquoten Anteil des Katalysators zusetzt, wobei jede der aufeinanderfolgenden Copolymerisationsreaktionen im wesentlichen unter den Bedingungen und mit den Mengenverhältnissen zwischen den verschiedenen Komponenten, wie sie in dem Anspruch 4 oder 5 definiert sind, durchgeführt wird.

7. Herstellungsverfahren nach einem der Ansprüche 4 bis 6, dadurch gekennzeichnet, daß es sich bei dem Kettenübertragungsmittel um die Thioglykolsäure handelt.

8. Herstellungsverfahren nach einem der Ansprüche 4 bis 7, dadurch gekennzeichnet, daß es sich bei dem Katalysator um das Ammoniumpersulfat handelt.

9. Herstellungsverfahren nach Anspruch 6, dadurch gekennzeichnet, daß man drei bis zehn aufeinanderfolgende Copolymerisationsreaktionen durchführt.

10. Herstellungsverfahren nach einem der Ansprüche 4 bis 9, dadurch gekennzeichnet, daß man eine Neutralisationsstufe bei einem pH-Wert von 3 bis 9 mit einem Neutralisationsmittel durchführt, das ausgewählt wird aus den Hydroxiden von Kalium, Natrium, Ammonium, den Alkylaminen, den Mono- und Polyalkanolaminen.

11. Verwendung eines anionischen Copolymers nach einem der Ansprüche 1 bis 3 in einem Verfahren zur mindestens teilweisen Verhinderung der Bildung von Verkrustungsbelägen, die auf den Wänden von Erdöl verarbeitenden, geothermalen oder industriellen Anlagen auftreten können, durch Zirkulierenlassen eines wäßrigen Milieus, das mindestens eine Alkalimetall- und/oder Erdalkalimetallverbindung enthält, in diesen Anlagen, dadurch gekennzeichnet, daß man dem wäßrigen Milieu das anionische Copolymer zusetzt.

12. Verwendung nach Anspruch 11, dadurch gekennzeichnet, daß das Copolymer in Form einer frisch hergestellten Lösung eingeführt wird.

13. Verwendung nach Anspruch 11, dadurch gekennzeichnet, daß das Copolymer in Form einer gealterten Lösung eingeführt wird.

14. Verwendung nach einem der Ansprüche 11 bis 13, dadurch gekennzeichnet, daß man das Copolymer in einer Menge von 1 bis 200 Gew.-ppm einführt.

15. Verwendung nach Anspruch 14, dadurch gekennzeichnet, daß man das Copolymer in einer Menge von 15 bis 50 Gew.-ppm einführt.

## Claims

1. An anionic copolymer comprising recurrent units deriving from acrylic acid and acrylamide in a ratio by weight from about 95:5 to 25:75, characterized in that the molecular weight distribution of said copolymer, determined by exclusion analytic chromatography, is such that at least 60% of the weight molecular weights are lower than 500.

2. An anionic copolymer according to claim 1, wherein the acrylic acid is at least partly present as acrylate of at least one alkali metal.

3. A copolymer according to claim 1 or 2, wherein the polydispersity is at most 3.

4. A process for manufacturing a copolymer according to one of the claims 1 to 3, characterized by the reaction of the four following constituents:
    a) a first monomer essentially consisting of acrylic acid,
    b) a second monomer essentially consisting of acrylamide,
    c) a chain transfer agent, and
    d) a free radical initiator catalyst,
in a medium comprising an inert solvent at a temperature from 60 to 120°C, the total amount of said monomers in proportion by weight to said medium being from 4 to 15%, the amount of said chain transfer agent in proportion by weight to said monomers from 5 to 30% and the amount of catalyst in proportion by weight to said monomers from 2 to 8%, the first and second monomers being in a respective ratio by weight from 95:5 to 25:75, so as to obtain a product comprising the desired copolymer in admixture with the solvent.

5. A manufacturing process according to claim 4, characterized in that the copolymerization reaction is completed by reacting said solvent-copolymer product with an additional catalyst amount of 0.5 to 4% by weight in proportion to said monomers.

6. A manufacturing process according to claim 4 or 5, characterized in that the amount of constituents to be involved in the reaction is subdivided into substantially equal aliquot parts, a first copolymerization reaction is performed in the conditions and with the proportions of the various constituents defined in claim 4 or 5, so as to form said solvent-copolymer product, and, after substantial completion of the preceding copolymerization reaction, at least one other consecutive copolymerization reaction is performed by adding to the solvent-copolymer product of the preceding reaction an aliquot part of said first and second monomers, an aliquot part of the chain transfer agent and an aliquot part of catalyst, each of the successive copolymerization reactions being performed substantially in the conditions and with the proportions between the various constituents defined in claim 4 or 5.

7. A manufacturing process according to any one of claims 4 to 6, characterized by the use of thioglycolic acid as chain transfer agent.

8. A manufacturing process according to any one of claims 4 to 7, characterized by the use of ammonium persulfate as catalyst.

9. A manufacturing process according to claim 6 characterized by 3 to 10 successive copolymerization reactions.

10. A manufacturing process according to any one of claims 4 to 9, characterized in that the step of neutralization at a pH from 3 to 9 is performed with a neutralization agent selected from potassium, sodium and ammonium hydroxides, alkylamines, mono- and polyalkanolamines.

11. The use of an anionic copolymer according to one of the claims 1 to 3, for at least partially preventing the formation of incrusting deposits on the walls of oil, geothermal or industrial equipments by circulating through said equipments an aqueous medium containing at least one compound of alkali or alkaline-earth metal, characterized in that said anionic copolymer is added to said aqueous medium.

12. The use, according to claim 11, of an anionic copolymer, characterized in that said copolymer is introduced as a freshly prepared solution.

13. The use, according to claim 11, of an anionic copolymer, characterized in that said copolymer is introduced as an aged solution.

14. The use, according to one of claims 11 to 13, of an anionic copolymer, characterized by the introduction of said copolymer in an amount from 1 to 200 ppm by weight.

15. The use, according to claim 14, of an anionic copolymer, characterized by the introduction of said copolymer in an amount from 15 to 50 ppm by weight.

PL_unique

FIG.1

FIG.2

FIG.3

FIG.4